# EUROPEAN PATENT APPLICATION

(11) **EP 3 185 165 A1**
(43) Date of publication of application: **28.06.2017**
(21) Application number: 15307083.4
(22) Date of filing: 21.12.2015
(51) Int. Cl.: G06F 21/57, G06F 21/62, G06F 9/445

(54) **AN ELECTRONIC DEVICE COMPRISING A MECANISM TO STORE SECURELY DATA ASSOCIATED TO AN APPLICATION**

(71) Applicant: GEMALTO SA, 92190 Meudon (FR)
(72) Inventor: FRANCHI, Christophe, 92190 Meudon (FR); MARSEILLE, François-Xavier, 92190 Meudon (FR); VERGNES, Fabrice, 92190 Meudon (FR)
(74) Representative: Delaval, Guillaume Laurent

(57) **Abstract**

The invention relates to an electronic system capable of installing and running at least one application (102), comprising a memory area adapted to store the at least one application (102) and at least one data repository (101) associated to the at least one application (102) and stored independently from said application (102), the electronic system also comprising a secure enclave implementing a representative entity (100) which is adapted to link the at least one data repository (101) to the at least one application (102) for said application (102) to access to its associated data when installed in the electronic system.

## Description

### TECHNICAL FIELD

The present invention relates to the field of embedded software and electronic, and more particularly to an electronic device comprising a mechanism to store securely data associated to an application.

### BACKGROUND OF THE INVENTION

Software applications and applets written in the Java high-level programming language have been designed so that an application written in Java can be run on many different computer brands or computer platforms without change. This is accomplished by the following procedure. When a Java application is written, it is compiled into "Class" files containing byte codes that are instructions for a hypothetical computer called a Java Virtual Machine. An implementation of this virtual machine is written for each platform that is supported. When a user wishes to run a particular Java application on a selected platform, the class files compiled from the desired application is loaded onto the selected platform. The Java virtual machine for the selected platform is run, and interprets the byte codes in the class file, thus effectively running the Java application.

In order for a Java application to run on a specific platform, a Java virtual machine implementation must be written that will run within the constraints of the platform, and a mechanism must be provided for loading the desired Java application on the platform, again keeping within the constraints of this platform.

Conventional platforms that support Java are typically microprocessor-based computers, with access to relatively large amounts of memory and hard disk storage space. Such microprocessor implementations frequently are used in desktop and personal computers. An adapted version of Java called Java Card also exists and is adapted for implementations on microcontrollers or microprocessors embedded used in a portable device such as a smart card.

Once an application is already installed on a Java Card device, deploying a new version of the application by conserving the existing application's data is not an easy task and in some ways may be impossible. In particular, the objects previously created by the application are generally deleted when the application is deleted. Additionally, in the new version of the application, the format of the objects may have changed.

One solution which belongs to the state of the art is to export the application data to the device file system. This solution is considered as unsecure as the device and the access to its file system may in many cases be considered as unsecure.

### SUMMARY OF THE INVENTION

The invention relates to an electronic system capable of installing and running at least one application, comprising:
- a memory area adapted to store the at least one application and at least one data repository associated to the at least one application and stored independently from said application;
- a secure enclave implementing a representative entity which is adapted to link the at least one data repository to the at least one application for said application to access to its associated data when installed in the electronic system.

According to one aspect of the invention, the at least one data repository is associated to an identifier of its associated application, the representative entity being configured to link the at least one data repository to the at least one application using this identifier.

In one embodiment, an application that is installed for the first time in the electronic system registers to the representative entity by providing its application identifier.

As an example, the secure enclave is a secure element.

In another example, the electronic system comprises an electronic device cooperating with the secure enclave. The electronic device is configured to install at least one application in its memory, the at least one application being linked with their associated data repository by the representative entity.

The electronic device can be adapted to store at least one data repository associated to at least one application.

According to one aspect of the invention, an asymmetric key pair can be attributed to and stored by the secure enclave, said key pair being used to encrypt and decrypt data stored in a data repository when located outside of the secure enclave.

According to another aspect of the invention, the secure enclave can be adapted to store at least one data repository associated to at least one application.

As an example, the electronic system can be adapted to receive at least one data repository from a remote server, the data repository comprising an application identifier, said data repository being associated to an application which is identified by said application identifier, the electronic system being adapted for the data repository to be registered by the representative entity by providing said application identifier.

The memory area can be composed of a first set of at least one memory component for storing the at least one application and of a second set of at least one memory component for storing that at least one data repository.

According to another example, the memory area is composed of a third set of at least one memory component for storing at least one application and at least one data repository.

The invention also related to a remote server adapted to transfer a data repository associated to an application from a first electronic system as described above to a second electronic system as described above.

### BRIEF DESCRIPTION OF THE DRAWINGS

Additional features and advantages of the invention will be more clearly understandable after reading a detailed description of one preferred embodiment of the invention, given as an indicative and non-limitative example, in conjunction with the following drawings:
- Figure 1 provides an example of an electronic device allowing to store securely data associated to an application;
- Figure 2 illustrates a system composed of an electronic device cooperating with a secure element, the secure element comprising a representative entity that is used to manage data associated to the applications that are installed on the electronic device;
- Figure 3 provides an example of a telecommunication system where an over-the-air platform is used to transfer a data repository from a first secure element to a second secure element.

### DETAILED DESCRIPTION

Herein under is considered a case in which an electronic system according to the invention comprises a representative entity implemented into a secure element. However, it is only for exemplifying purposes and is not considered to reduce the scope of the present invention. For example, the representative entity can be implemented as a part of a System-on-Chip (SoC) or by any hardware or software oriented technology allowing a secure execution of said entity. Further, the word application designates a program configured to perform a set of at least one function. An applet is an example of small application. The skilled person will also appreciate that the electronic system may comprise several representative entity. The invention can be applied in the context of a Java Card electronic system, a GlobalPlatform electronic system and any other electronic system requiring installing, re-installing or updating an application. The invention is for example in the context of an Androïd (trademark) system or of an iOS (trademark) system.

Moreover, while the subject invention will now be described in detail with reference to the figures, it is done so in connection with the illustrative embodiments. It is intended that changes and modifications can be made to the described embodiments without departing from the true scope and spirit of the subject invention as defined by the appended claims.

In the following description, numerous specific details are set forth. However, it is understood that embodiments may be practiced without these specific details. In other instances, well known circuits, structures and techniques have not been show in detail in order not to obscure the understanding of the description.

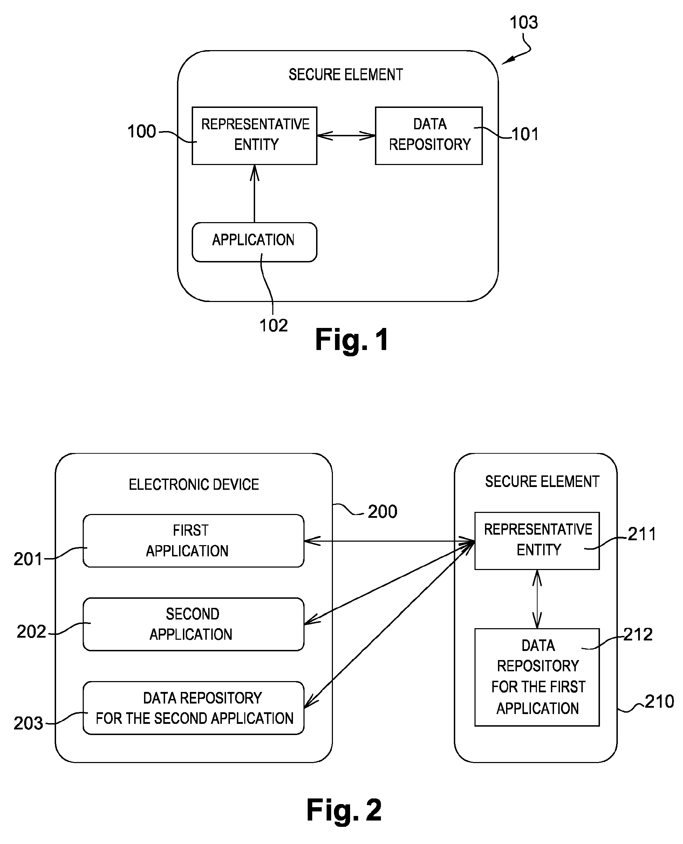

**Figure 1** illustrates schematically the principle of the invention. This embodiment is an implementation example allowing to introduce the main components of a proposed update mechanism for applications embedded in an electronic system.

The proposed update mechanism is based on the use by an electronic system of a representative entity 100 cooperating with a data repository 101. In this example, the electronic system is a secure element 103. However, the person skilled in the art will understand that the invention can be implemented with an electronic system composed of an electronic device cooperating with a secure element or any secured enclave implemented in hardware and/or software wherein the functions implemented by the representative entity can be executed securely.

The representative entity 101 is a functional module accessible by one or several applications installed in the electronic system. One of its functions is to provide trusted access to a data repository 101 for an associated application 102 for it to be able to retrieve, to store, to modify and/or to delete data. One important aspect of the invention is that the location and structure of the data repository 101 is unknown by the application 102. An application which is not allowed or not recognized by the representative entity 100 cannot have access to a data repository to which it is not associated. As a given application and its associated data repository are stored and managed independently, the removal or the upgrade of the application will not systematically induce any change or deletion of the associated data repository.

In GlobalPlatform (trademark), for example, this entity could be a Security Domain.

Further, an application programming interface (API) adapted for the proposed application update mechanism can be defined. This new API offers to the installed applications a set of at least one service. Here are some example services that can be proposed to the applications by this API:
- getting a data repository: an application needing to store its data in the electronic system and which is not associated to an already existing data repository can use the API to create a new data repository;
- deleting a data repository: the user of the application may require to delete data associated to a given application, for example personal information and/or configuration data. The API allows also to delete a data repository at the time of removing an application installed on the electronic device;
- setting data into the data repository: as an example, in the Java Card context, the API supports storage of all Java Card primitive types as well as storage of data represented in a structured way (file system for example);
- getting data from the data repository.

Further, the proposed mechanism may also be configured to handle events and call-backs related to the installation or update of an applet. As an example, two events can be defined for that purpose:
- an event to inform the application that it has to save its data through the data repository;
- once a new application is loaded and installed, an event to inform the new application that it has to get the data stored previously through the data repository.

In this first example (**Figure 1**), the representative entity 100, the data repository 101 and the applet 102 are installed into a secure element 103. Secure elements are small devices comprising a memory, a microprocessor and an operating system for computing treatments. Such secure elements may comprise a plurality of memories of different types. They are called "secure" because they are able to control the access to the data they contain and to authorize or not the use of data by other machines. The secure elements may also provide computation services based on cryptographic components. In general, secure elements have limited computing resources and are intended to be connected to a host machine. Secure elements may be removable or embedded in ahost device.

The secure elements may embed an object-oriented virtual machine in order to be able to run applications written in an object-oriented language. Usually, these object-oriented applications manage applicative data which are stored into the secure element. For instance, many smart cards comprise a virtual machine and applets compliant with Java Card specifications.

The applications which are stored and installed into a secure element are usually referred to through an identifier. Such an identifier may be an Application IDentifier (AID) as defined by IS07816-5 standard for example. An application is usually managed through a package which is loaded in the secure element. Then an instance of the application is created in the secure element. An AID is used for identifying each application package. An AID is used for identifying each application instance. Until now each AID of application package and each AID of application instance must be unique in a secure element. The uniqueness of each AID allows avoiding ambiguity when referring to an element in a secure element. The virtual machine manages both the administration and the interpretation/execution of the applications. The administration corresponds to the loading, the creation/instantiation, the upgrading and the removing of application.

In this description, the AID is an example of identifier of an application. However, the skilled person will appreciate that any identifier that can identify an application unambiguously can also be used.

As an example, when an application 102 is installed for the first time, it uses an API to register to the representative entity 100 and to get a data repository. The application can be registered for example by providing its application identifier to the representative entity 100. The skilled person will appreciate that the application may also be authenticated by the representative entity using authenticating techniques which are belonging to the state of the art. The representative entity 100 will then create a data repository 101 which will be allocated to the application 102 for it to store its data. The data repository 101 can be defined for example by one or several ranges of memory addresses referring to some portions of the internal memory of the secure element 103.

When the application 102 needs to access or to write data in its data repository 101, it can use the best-matching API function for that purpose. The representative entity will be able to establish the correspondence between the data repository 101 and the application 102. One important aspect of the invention is that the application 102 has no information about the location of the data repository 101. The representative entity 100 is the only entity that is able to do this.

The representative entity can be further configured such that different versions of the same application are authorized to access the same data repository. Therefore, when an application is updated, the data repository can be kept and reused by a newer version.

Another advantage of the invention is that when an application is uninstalled, its associated data can then be kept for a time chosen by the user or defined by the operating system. Thus, if the application is later reinstalled, the stored data can be used again.

**Figure 2** illustrates an electronic system composed of an electronic device cooperating with a secure element, the secure element comprising a representative entity that is used to manage data associated to the applications that are installed on the electronic device.

In this example, a first application 201 and a second application 202 are installed on an electronic device 200. The electronic device 200 cooperates with a secure element 210 comprising a representative entity 211. The secure element 210 can be of embedded or removable type, such as a UICC (Universal Integrated Circuit Card) card. Each of the two installed applications 201, 202 need to store data. For that purpose, the representative entity 211 links the applications to their respective data repository 203, 212. In this example, a data repository 212 associated to the first application 201 is installed in the secure element 210. A second data repository 203 associated to second application 202 is installed in the memory of the electronic device 200.

If the data repository 203 is stored in an area of the electronic device 200 that may be considered as unsecure, data can be enciphered at the time of writing it and then deciphered by the representative entity 203 at the time of reading or modifying it. For that purpose, an asymmetric key pair can be attributed to the representative entity 211 for that purpose. In that case, a public key can be used for enciphering data before storing it in the data repository 203 associated to the second application 202.

The ciphering process can be handled either by the representative entity 211, by the application 202 or by a ciphering software or hardware ciphering module located in the electronic device 200.

When the ciphering process is handled on the electronic device 200 side, the representative entity 211 will have to transfer its public key to the second application 202 or to a module responsible of the ciphering. According to one aspect of the invention, this can be done during the installation process of said application.

Data is deciphered by the representative entity 211 using a private key. This private key is stored and only known by the representative entity 211. Therefore, at the time of reading a portion of ciphered data stored in the data repository 203 for the second application 202, said ciphered data is transmitted to the secure element 210, then the representative entity 211 will decipher data required by the second application 202 and the deciphered data will be finally transmitted back to the electronic device 200 for being used by the second application 202.

The ciphering and deciphering processes are controlled by the representative entity allowing to store data securely in an unsecure memory area, for example in the memory of the electronic device or on a memory which is external to the electronic device 200, such as on a memory card connected to the electronic device. According to another aspect of the invention a data repository secured by the representative entity can also be located remotely, for example on a remote server accessible by the electronic device using a communication channel.

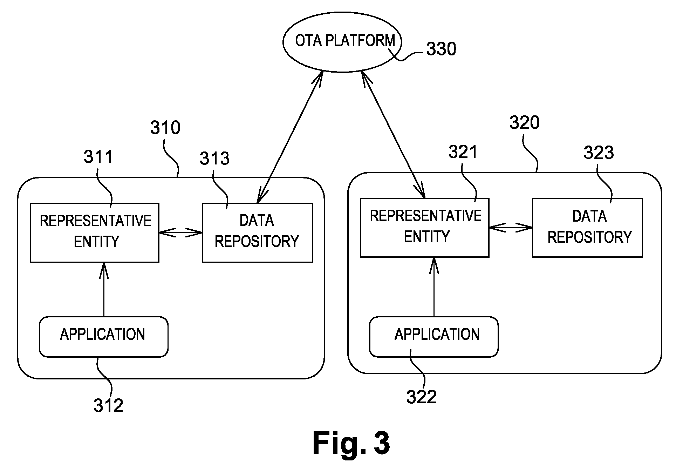

**Figure 3** illustrates an example where an over-the-air platform is used to transfer a data repository controlled by a representative entity from a first secure element to a second secure element.

In this example, a first secure element 310 comprises an installed application 312 which is associated to a data repository 313. A representative entity 311 is in charge of interfacing the first data repository 313 with the application 312 in particular for storing, reading and deleting data. As already explained in this description, the application 312 has no knowledge about the location and properties of the data repository 313, thanks to the use of the representative entity 311.

This first secure element 310 can be embedded into a first electronic device (not represented) and its user may want to change its electronic device for a new one. Alternatively, the secure element may be removable, and the user may have to change it for another one. In both cases, it is desirable to have a solution allowing to keep data associated the applications for a further use.

A proposed solution is to implement an over-the-air (OTA) platform 330 with the capability of recovering one or several data repository 313 associated to a first secure element 310 and copy it 323 on a second secure element 320. For that purpose, the OTA platform 330 will establish a first secure channel with the first secure element 310 in order to upload the data repository 313. This can be done at the time of migrating from the first secure element 310 to the second secure element 320 or at any time, with the aim to create a backup that may be used later, for example if an electronic device is lost or stolen.

According to one aspect of the invention, an identifier of the application associated to a data repository is stored together with the repository. This application identifier can be of AID type or any identifier allowing to unambiguously identify a given application.

Once the data repository 313 is uploaded by the OTA platform 330, it is then possible to install it inside the second secure element 320. This process can be triggered by the OTA platform 330 or upon request of the second secure element 320. The OTA platform 330 will establish a second secure channel with the second secure element 320 in order to upload the data repository 323. A copy 323 of the data repository 313 is installed in the memory of the second secure element 320. The application 322 associated to the newly installed data repository 323 can be already installed in the second secure element 320 or installed after the installation of the data repository 323.

Once the data repository 323 has been stored in the memory of the second secure element 320, it has to be registered by the representative entity 321. For that purpose, a set of characteristics describing the data repository 323 are communicated to the representative entity. This set of characteristics comprise for example:
- the identifier of the application associated to the data repository;
- a description of the data repository, including its size, memory addresses and/or data structures required by the representative entity 321 to access data stored in the data repository 323.

Once the newly installed data repository 323 is registered by the representative entity 321, the application 322 can access, modify, delete or add data to the repository 323 through the representative entity 321. Said differently, the application 322 is identified by its application identifier. When it requests a service to the representative entity 321, for example getting data, it is identified by its application identifier by the representative entity 321. As this identifier matches with the one provided by the newly installed data repository 323, the representative entity responds to the application by providing the requested data.

Several embodiments have been described underlining the role of the representative entity to link a given application with an associated data repository.

The invention is also applicable in the following situations.

The representative entity can be adapted such that it links a plurality of applications to a one given data repository. In that case, the representative entity will memorize a set of application identifiers comprising all the identifiers of the applications associated to the given data repository.

The representative entity can also be adapted such that a given application is linked to a plurality of data repositories. This is particularly useful when data should be memorized in different areas of an electronic system. As an example, a first data repository is located inside the secure element and a second data repository is located in an unsecure memory area of the system. As both data repositories are associated to the given application, said application may choose to store sensitive data in the secure element and less sensitive data outside of the secure element.

## Claims

1. An electronic system capable of installing and running at least one application (102), comprising:
- a memory area adapted to store the at least one application (102) and at least one data repository (101) associated to the at least one application (102) and stored independently from said application (102);
- a secure enclave implementing a representative entity (100) which is adapted to link the at least one data repository (101) to the at least one application (102) for said application (102) to access to its associated data when installed in the electronic system.

2. An electronic system according to claim 1, wherein the at least one data repository (101) is associated to an identifier of its associated application, the representative entity (100) being configured to link the at least one data repository (101) to the at least one application (102) using this identifier.

3. An electronic system according to claim 2, wherein an application (102) that is installed for the first time in the electronic system registers to the representative entity (100) by providing its application identifier.

4. An electronic system according to any of the preceding claims, wherein the secure enclave is a secure element (103).

5. An electronic system according to any of the preceding claims, comprising an electronic device (200) cooperating with the secure enclave (210), the electronic device being configured to install at least one application (201, 202) in its memory, the at least one application (201, 202) being linked with their associated data repository (203, 212) by the representative entity (211).

6. An electronic system according to claim 5, wherein the electronic device (200) is adapted to store at least one data repository (203) associated to at least one application (202).

7. An electronic system according to claim 5, wherein an asymmetric key pair is attributed to and stored by the secure enclave (210), said key pair being used to encrypt and decrypt data stored in a data repository (203) when located outside of the secure enclave (210).

8. An electronic system according to any of the preceding claims, wherein the secure enclave (103, 210) is adapted to store at least one data repository (101, 212) associated to at least one application (102, 201).

9. An electronic system according to any of the preceding claims, adapted to receive at least one data repository (323) from a remote server (330), the data repository (323) comprising an application identifier, said data repository (323) being associated to an application (322) which is identified by said application identifier, the electronic system being adapted for the data repository (323) to be registered by the representative entity (321) by providing said application identifier.

10. An electronic system according to any of the preceding claims, wherein the memory area is composed of a first set of at least one memory component for storing the at least one application and of a second set of at least one memory component for storing that at least one data repository.

11. An electronic system according to any of the preceding claims, wherein the memory area is composed of a third set of at least one memory component for storing at least one application and at least one data repository.

12. A remote server (330) adapted to transfer a data repository (313, 323) associated to an application (312, 322) from a first electronic system (310) according to one of the preceding claims to a second electronic system (320) according to one of the preceding claims.
